# EUROPÄISCHE PATENTSCHRIFT

(11) **EP 1 844 532 B1**
(45) Veröffentlichungstag und Bekanntmachung des Hinweises auf die Patenterteilung: **20.01.2010**
(21) Anmeldenummer: 06708004.4
(22) Anmeldetag: 03.02.2006
(51) Int. Cl.: H02G 15/24, H01R 43/02, B23K 20/12

(54) **VERBINDUNG VON ELEKTRISCHEN KABELN**
CONNECTION OF ELECTRICAL CABLES
LIAISON DE CABLES ELECTRIQUES

(30) Priorität: 03.02.2005 EP 05002211; 13.06.2005 EP 05012641; 08.09.2005 EP 05019546
(43) Veröffentlichungstag der Anmeldung: 17.10.2007
(73) Patentinhaber: Auto Kabel Managementgesellschaft mbH, 79688 Hausen i.W. (DE)
(72) Erfinder: MERTEL, Adelheid, 47877 Willich (DE)
(74) Vertreter: Cohausz & Florack
(86) Internationale Anmeldenummer: PCT/EP2006/050648
(87) Internationale Veröffentlichungsnummer: WO 2006/082231

(56) Entgegenhaltungen:
- GB-A- 1 175 547

## Beschreibung

### TECHNISCHES GEBIET

Die Anmeldung betrifft ein Verfahren zur Herstellung einer elektrischen Verbindung zwischen zumindest zwei Kabeln, insbesondere Batteriekabel für Kraftfahrzeuge, wobei zumindest ein erstes Kabel aus einem Leiter und einem Isolationsmantel gebildet wird, und zumindest ein zweites Kabel zumindest aus einem Leiter gebildet wird. Ferner betrifft die Anmeldung eine Verbindungsanordnung zwischen zumindest zwei Kabeln, insbesondere Batteriekabel für Kraftfahrzeuge, mit zumindest einem ersten Kabel mit einem Leiter und einem Isolationsmantel und zumindest einem zweiten Kabel mit zumindest einem Leiter.

### HINTERGRUND

Eine stoffschlüssige Befestigung und Verbindung von Kabeln untereinander kann heutzutage beispielsweise mittels Schweißen oder Löten erfolgen. Es hat sich gezeigt, dass Reibschweißverfahren, insbesondere Rotationsreibschweißverfahren geeignet sind, zwei Kabel zu verbinden. GB-1175547 offenbart ein solches Rotationsreibschweißverfahren, gemäß dem Oberbegriff des Anspruchs 1, und eine Verbindungsanordnung gemäß dem Oberbegriff des Anspruchs 14. Jedoch ist es beim Rotationsreibschweißverfahren notwendig, die einzelnen Drähte eines Leiters mittels einer Stützhülse zu verpressen, so dass sich diese beim Rotationsreibschweißen nicht spreizen. Außerdem kann beim Rotationsreibschweißen jeweils nur ein Werkstück mit einem anderen verbunden werden. Für jede Verbindung ist ein eigener Arbeitsschritt notwendig. Schließlich muss beim Rotationsreibschweißen zumindest ein Fügepartner frei um seine Achse rotierbar sein.

Auch ist bekannt, elektrische Übergabestützpunkte an Flachleitern anzuordnen. Auch hier wurde vorgeschlagen, einen Übergabestützpunkt mittels Reibschweißen an dem Flachkabel anzuordnen. Jedoch hat sich gezeigt, dass die Lagefestigkeit des Bolzens beim Rotationsreibschweißen nicht exakt genug einstellbar ist. Außerdem ist es bekannt, dass bei herkömmlichen Übergabestützpunkten ein Bolzen mit einem Gewinde in eine Bohrung des Flachleiters eingeschoben wird und auf das Gewinde eine Hülse aufgeschraubt wird. Diese Hülse presst dann den Bolzen an den Flachleiter. Ein solcher Aufbau erfordert jedoch gewisse Mindestmaße, um beispielsweise die Abscherfestigkeit des Gewindes des Bolzens zu gewährleisten. Somit können Übergabestützpunkte nicht unter einer Mindestbauhöhe mit herkömmlichen Verfahren zur Verfügung gestellt werden. Eine solche Verbindung ist auch nur mit Kupferleitern möglich. Bei Aluminiumleitern kann durch eine Aluminiumoxidschicht auf dem Leiter und/oder der Hülse eine elektrische Kontaktierung gestört sein.

Der Erfindung lag somit die Aufgabe zugrunde, ein Verfahren sowie eine Verbindungsanordnung für Leiter zur Verfügung zu stellen, welches sich durch einfache Handhabbarkeit, geringe Herstellungskosten und große Lagefestigkeit der Verbindung auszeichnet.

### GEGENSTAND DER ERFINDUNG

Zur Lösung der zuvor aufgezeigten und aus dem Stand der Technik hergeleiteten Aufgabe schlägt die Anmeldung ein Verfahren nach dem Oberbegriff des Anspruchs 1 vor, welches sich dadurch auszeichnet, dass die Kabel mit Hilfe von Multi-Orbital-Schweißen derart verbunden werden, dass zwischen den Leitern der Kabel eine stoffschlüssige Verbindung hergestellt wird.

Durch die Anwendung des Multi-Orbital-Schweißens, bei dem die zu verschweißenden Werkstücke mit einer relativ zueinander kreisförmigen, pendelnden Bewegung mit kleinen Radien bewegt werden können, lässt sich eine hohe Lagefestigkeit der Schweißverbindung realisieren. Darüber hinaus ist es beim Multi-Orbital-Schweißen nicht mehr notwendig, eines der zu verschweißenden Werkstücke in ein um die Achse des Werkstücks rotierendes Werkzeug einzuspannen. Durch das Multi-Orbital-Schweißen kann es lediglich notwendig sein, die Werkstücke relativ zueinander in kleine, ellipsen- oder kreisförmige Bewegungen zu versetzen. Der Anpressdruck zwischen den Werkstücken ist erheblich geringer als beim Rotationsreibschweißen. Außerdem können Verbindungen mit kleiner Bauhöhe realisiert werden, da die Werkzeuge nicht unmittelbar über der Schweißstelle das Werkstück halten müssen, sondern auch seitlich davon.

Gemäß eines vorteilhaften Ausführungsbeispiels wird vorgeschlagen, freie Stirnseiten zweier Kabel miteinander zu verbinden. Durch die Anwendung des Multi-Orbital-Schweißens kann eine solche Stoß-Verbindung kostengünstig und mit geringen Anforderungen an die Fügetechnik hergestellt werden.

Besonders vorteilhaft ist es, wenn während des Multi-Orbital-Schweißens die Leiter an den freien Stirnseiten stoffschlüssig verbunden werden und die Kabelmäntel der Kabel stoffschlüssig verbunden werden, derart, dass eine Abdichtung der Schweißnaht durch die Verbindung der Kabelmäntel gebildet wird. Die Abdichtung kann als Schutz der Schweißnaht vor Umwelteinflüssen dienen. Das Multi-Orbital-Schweißen zeichnet sich dadurch aus, dass in einem Arbeitsschritt verschiedene Werkstoffe miteinander verbunden werden können. So ist es beispielsweise möglich, zwei Kabel, die jeweils aus zumindest einem Leiter und einem Kabelmantel gebildet sind, auf Stoß miteinander zu verbinden. Bei der Verschweißung der Stirnseiten kommt es bei der Anwendung des Multi-Orbital-Schweißens dazu, dass sowohl die beiden Leiter miteinander stoffschlüssig verbunden werden, als auch dass ein Stoffschluss zwischen den Isolationsmaterialien der Kabelmäntel erfolgt. Durch die Verbindung der Kabelmäntel erfolgt unmittelbar eine Abdichtung der Schweißnaht. Es ist nicht mehr notwendig, die Schweißnaht mittels eines Schrumpfschlauches abzudichten.

Das anmeldungsgemäße Verfahren eignet sich besonders für Verbindungen zwischen Aluminiumleitern, Buntmetallleitern, oder Leitern anderer metallischer Werkstoffe sowie Legierungen davon. Hierbei kann eine intermetallische Verbindung zwischen Werkstoffen der gleichen Art als auch zwischen unterschiedlichen Werkstoffen realisiert werden. Das zuvor beschriebene Verfahren ist besonders geeignet bei Aluminiumschweißnähten, da diese unmittelbar nach dem Schweißen vor Korrosion geschützt sind.

Vorteilhaft ist es auch, wenn das erste Kabel als Flachkabel gebildet ist, das zweite Kabel als Anschlussbolzen gebildet ist und wenn während des Multi-Orbital-Schweißens der Anschlussbolzen mit einer flachen Seite des Leiters des Flachkabels im Wesentlichen im T-Stoß verbunden wird. Eine solche Verbindung stellt einen Übergabestützpunkt zur Verfügung. Der Bolzen kann unmittelbar auf den Flachleiter aufgebracht werden. Es ist nicht notwendig, den Flachleiter zu durchbohren und den Übergabestützpunkt, wie oben beschrieben, aufzubauen. Dadurch, dass der Anschlussbolzen mittels Multi-Orbital-Schweißens an das Flachkabel geschweißt wird, ergibt sich eine hohe Lagefestigkeit des Bolzens. Hierdurch können an dem Bolzen angeordnete Anschlussflächen für Anschlüsse weiterer Kabel in einer exakt definierten Lage zum Flachkabel angeordnet werden.

Der Bolzen wird beim Verschweißen in den Kabelmantel des Flachkabels geführt. Durch das Multi-Orbital-Schweißen wird gemäß eines vorteilhaften Ausführungsbeispiels der Bolzen entlang seiner Mantelfläche formschlüssig mit dem Kabelmantel des Flachleiters verbunden, derart, dass eine Isolation der Schweißnaht gebildet wird. Die Mantelfläche des Bolzens, die in unmittelbarem Kontakt zu dem isolierenden Kabelmantel des Flachkabels steht, wird während des Multi-Orbital-Schweißens formschlüssig mit dem Kabelmantel verbunden. Während des Multi-Orbital-Schweißens wird das Isolationsmaterial des Kabelmantels aufgeschmolzen und fügt sich an die Mantelfläche des Bolzens. Hierdurch wird zumindest eine formschlüssige Verbindung zwischen Bolzen und Kabelmantel gewährleistet, was zu einer Isolation der Schweißnaht führt.

Besonders bevorzugt ist es, wenn der Bolzen eine Ringschulter aufweist. Diese Ringschulter kann kurz oberhalb der Stirnfläche angeordnet sein. Der Bolzen geht dann, ausgehend von der Stirnfläche, von seiner ursprünglichen Form über in die Ringschulter.

Ein Schutz/Abdichtung der Schweißnaht wird gemäß eines vorteilhaften Ausführungsbeispiels dadurch gebildet, dass die Ringschulter des Bolzens aus Metall gebildet ist, und dass während des Multi-Orbital-Schweißens die dem Flachleiter zugewandte Seite der Ringschulter zumindest teilweise formschlüssig mit dem Kabelmantel des Flachleiters verbunden wird. Die Ringschulter wird so an dem Bolzen angeordnet, dass sie in etwa einen Abstand entsprechend der Stärke des Kabelmantels von der Stirnfläche des Bolzens hat. Wird dann der Bolzen mittels Multi-Orbital-Schweißens auf den Flachleiter aufgeschweißt, wird der Kabelmantel, der unterhalb der Fläche der Ringschulter liegt, aufgeschmolzen, was zu einem Formschluss zwischen Unterseite der Ringschulter und Kabelmantel führt.

Besonders dicht wird eine Abdichtung der Schweißnaht, wenn die Ringschulter des Bolzens aus Isolationsmaterial gebildet ist und wenn während des Multi-Orbital-Schweißens die dem Flachleiter zugewandte Seite der Ringschulter zumindest teilweise stoffschlüssig mit dem Kabelmantel des Flachleiters verbunden wird. In diesem Fall wird neben der stoffschlüssigen Verbindung zwischen der Stirnseite des Bolzens und dem Flachleiter eine stoffschlüssige Verbindung zwischen der Ringschulter und dem Kabelmantel des Flachleiters hergestellt. Durch diese stoffschlüssige Verbindung zwischen Kabelmantel und Ringschulter wird eine zuverlässige Dichtung der Schweißnaht in nur einem Arbeitschritt gewährleistet.

Besonders einfach lässt sich ein Übergabestützpunkt realisieren, wenn gemäß eines vorteilhaften Ausführungsbeispiels während des Multi-Orbital-Schweißens der Bolzen durch den Kabelmantel des ersten Leiters getrieben wird. In diesem Fall wird das Material des Kabelmantels durch den Bolzen während des Schweißens verdrängt und schmiegt sich in der Schmelze unmittelbar an den Bolzen an, so dass ebenfalls eine Isolation der Schweißnaht gewährleistet ist.

Ebenfalls bevorzugt ist es, wenn vor dem Multi-Orbital-Schweißen der Kabelmantel des ersten Leiters mit einer dem Querschnitt des Bolzens in etwa entsprechenden Öffnung versehen wird. Eine solche Öffnung kann aus dem Kabelmantel ausgeschnitten werden. Dies geschieht gemäß eines vorteilhaften Ausführungsbeispiels mittels eines Lasers. In diesem Fall kann der Bolzen unmittelbar auf dem Flachleiter aufgesetzt werden und mit diesem verschweißt werden.

Um eine gute Schweißnaht zu gewährleisten, wird gemäß eines vorteilhaften Ausführungsbeispiels vorgeschlagen, dass die Stirnseite des Leiters eine Aussparung aufweist, derart, dass Schmelzgut darin aufgenommen wird. Die Aussparung kann als Sackloch oder Rille(n) ausgeführt sein. Während des Multi-Orbital-Schweißens werden die zu verschweißenden Werkstücke aufgeschmolzen und Schmelzgut tritt an den Nahtstellen aus. Das Schmelzgut wird gemäß des vorteilhaften Ausführungsbeispiels in das Innere der Aussparung geführt, was in einer guten Verbindung zwischen den Kabeln resultiert.

Ein weiterer Gegenstand der Anmeldung ist eine Verbindungsanordnung zwischen zumindest zwei Kabeln, insbesondere Batteriekabel von Kraftfahrzeugen, mit zumindest einem ersten Kabel mit einem Leiter und einem Isolationsmantel, und zumindest einem zweiten Kabel mit zumindest einem Leiter, welche dadurch gekennzeichnet ist, dass einem mittels Multi-Orbital-Schweißens gebildete stoffschlüssige Verbindung zwischen den Leitern der Kabel besteht.

Nachfolgend wird die Erfindung anhand einer Ausführungsbeispiele zeigenden Zeichnung näher erläutert. In der Zeichnung zeigen:

### KURZE BESCHREIBUNG DER FIGUREN

- Fig. 1: eine Anordnung zum Multi-Orbital-Schweißen von Kabelenden;
- Fig. 2: zwei auf Stoß miteinander verbundene Kabel;
- Fig. 3: eine Ansicht einer Anordnung zum Fügen eines Bolzens mit einem Flachkabel;
- Fig. 4: eine Schnittansicht einer Anordnung gemäß Fig. 3;
- Fig. 5: eine Schnittansicht eines mit einem Flachkabel verschweißten Bolzens.

### AUSFÜHRLICHE BESCHREIBUNG DER FIGUREN

Für das Multi-Orbital-Schweißen, wie es anmeldungsgemäß angewendet werden soll, werden die zu fügenden Werkstücke beiderseits benachbart zu den Fügeflächen in Werkzeuge verspannt. Die Fügeflächen werden gegeneinander gedrückt.

Zum Verschweißen mittels Multi-Orbital-Schweißen werden die Fügeflächen in Schwingungen versetzt, wobei die Werkzeuge je nach Anordnung der Einspannung in der Anlage in xz-, yx- und/oder in yz-Richtung gegenphasig zueinander schwingen. Die Werkzeuge können dabei mit starrer Phasenlage um 180° phasenverschoben schwingen. Es ist bevorzugt, dass die Werkstücke jeweils nur in einer Ebene schwingen, und ein Anpressdruck aus eine senkrecht zu er Ebene stehenden Richtung aufgebracht wird.

Beim Multi-Orbital-Schweißen sind die Fügepartner bereits nach weniger als einer Minute, bevorzugt nach wenigen Sekunden, beispielsweise 5-7 Sekunden, stoffschlüssig miteinander verbunden. Die Schweißwülste sind klein, da nur verhältnismäßig wenig Prozesswärme eingebracht wird. Unmittelbar nach dem Schweißvorgang kann eine Weiterverarbeitung beginnen, denn eine Halte-/Kühlzeit ist nicht mehr notwendig.

Der Anlauf der Werkzeuge kann von gegenphasiger Phasenlage ausgehend synchronisiert werden. Die Phasenwinkel zwischen den Schwingungen der Werkzeuge während des Schweißvorgangs kann genau geregelt werden. Es ist möglich, dass sich die Werkzeuge in einer relativ zueinander ellipseförmigen Schwingung bewegen. Ferner ist eine Zirkularschwingung möglich. Es ergibt sich eine axial pendelnde Kurbelbewegung zwischen den Werkstücken.

Bei den gegenläufigen ellipsenförmigen Schwingungen kann eine der Ellipsenachsen a oder b auch gegen 0 gehen. Die Frequenz der Zirkularschwingungen kann zwischen 20 Hz und einigen 100 Hz liegen. Die maximale Amplitude der Schwingungen kann weniger als 3 mm sein.

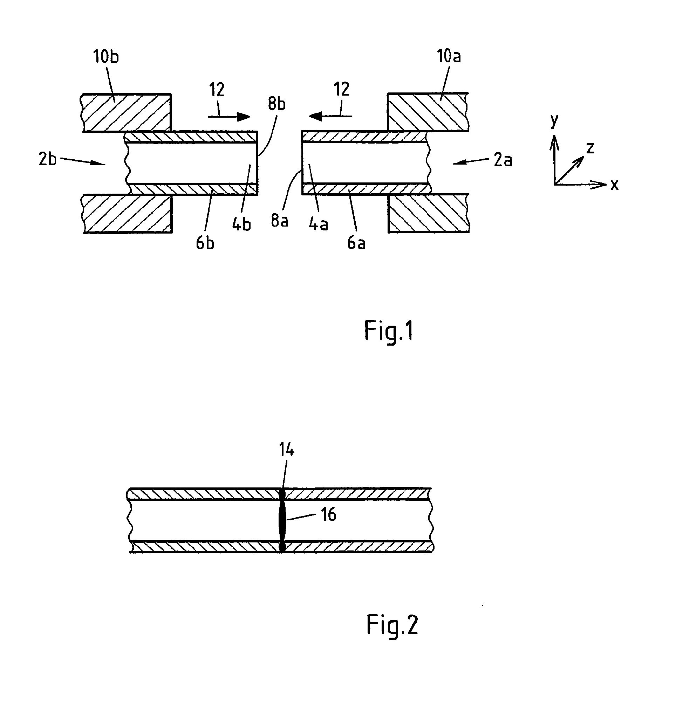

Zum Fügen von Kabeln ist eine Anordnung gemäß Fig. 1 vorteilhaft. In Fig. 1 sind Kabelenden 2a, 2b von Kabeln 2 dargestellt, wobei die Kabelenden 2a, b durch jeweils einen metallischen Leiter 4 und einen Kabelmantel 6 gebildet sind. Die Kabelenden 2 a, b sind jeweils in unmittelbarer Nähe zu den Stirnseiten 8 in Werkzeuge 10 eingespannt. Es ist möglich, dass ein Werkzeug starr ist und das andere Werkzeug die Schweißbewegungen durchführt. Zum Verschweißen der Kabelenden 2a, b werden diese in Richtung 12 entlang der x-Achse, durch die Werkzeuge 10 aufeinander zu bewegt. Zum Verschweißen wird ein Anpressdruck zwischen den Kabelenden 2a, b in der x-Achse durch die Werkzeuge 10 erzeugt. Ferner führen die Werkzeuge 10 gegenphasig zueinander kreisende Bewegungen durch. Hierbei werden kreisförmige Bewegungen in der yz-Achse durchgeführt. Durch die kreisförmigen, gegenphasigen Bewegungen, die auch exzentrisch verlaufen können, werden die Leiter 4 der Kabel 2 innerhalb kurzer Zeit stoffschlüssig miteinander verschweißt. Darüber hinaus werden gleichzeitig die aus Isolationsmaterial gebildeten Kabelmäntel 6 stoffschlüssig miteinander verschweißt.

Das Ergebnis einer Multi-Orbital-Schweißung der Kabel 2 ist in Fig. 2 dargestellt. Sowohl die Stirnflächen 8 der Leiter 4 als auch der Kabelmäntel 6 sind miteinander verschweißt. Schweißnähte 14 haben sich zwischen den Enden der Kabelmäntel 6 gebildet. Ferner ist eine Schweißnaht 16 zwischen den Leitern 4 gebildet. Durch die Schweißnaht 14 wird die Schweißnaht 16 abgedichtet, so dass weder Sauerstoff noch Feuchtigkeit die Schweißnaht 16 von außen angreifen kann. Mit Hilfe des Multi-Orbital-Schweißens können verschiedenste Werkstoffe in einem Arbeitschritt untereinander verbunden werden. Zu erkennen ist, dass neben der Verschweißung der Leiter 4, die aus Metallen gebildet sind, zusätzlich die Kabelmäntel 6, die auch Nichtmetallen gebildet sind, verschweißt werden. Die Leiter 4 können aus Eisenmetallen und Nichteisenmetallen, wie Aluminium, Kupfer oder sonstigen Buntmetallen, oder Legierungen davon gebildet sein. Durch das anmeldungsgemäße Verschweißen können Metalle verschiedenster Arten miteinander verschweißt werden. Zusätzlich lassen sich auch Nichtmetalle im selben Arbeitsgang miteinander verschweißen.

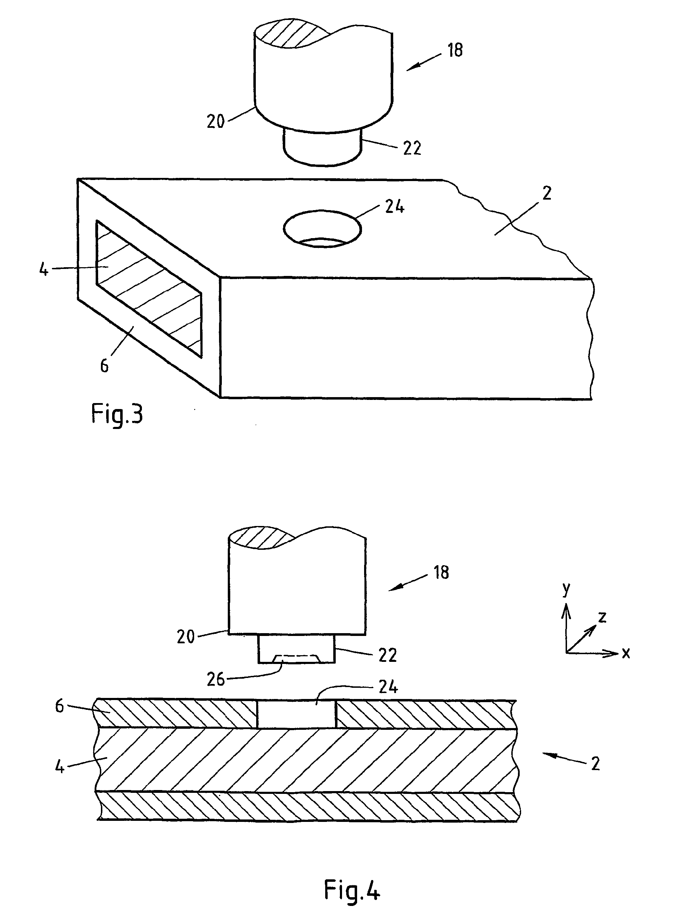

Fig. 3 zeigt eine Ansicht einer Anordnung zum Verschweißen eines Bolzens 18 mit einem Flachkabel 2. Sowohl Flachkabel 2 als auch Bolzen 18 sind in Multi-Orbital-Schweißwerkzeuge eingespannt (nicht dargestellt). Der Bolzen 18 ist gebildet aus einer Ringschulter 20 und einem Vorsprung 22. Im Flachkabel 2 ist eine Aussparung 24 vorgesehen. Die Aussparung 24 entspricht in ihrer Größe dem Vorsprung 22 des Bolzens 18. Zum Verschweißen des Bolzens 18 mit dem Flachkabel 2 wird der Bolzen 18 in die Aussparung 24 eingeführt und die Werkstücke werden miteinander verschweißt.

Fig. 4 zeigt eine Schnittansicht der Anordnung aus Fig. 3. Zusätzlich zu erkennen ist die Aussparung 26, die als Sackloch in dem Vorsprung 22 an der Stirnfläche des Bolzens 18 angeordnet ist. Die Aussparung 24 kann mittels Laser aus dem Kabelmantel 6 ausgeschnitten sein.

Bevorzugt ist, wenn die Aussparung 24 minimal kleiner, bevorzugt 0,01-10%, als der Durchmesser des Vorsprungs 22, so dass die Mantelfläche des Vorsprungs 22 beim Einführen des Bolzens 18 in die Aussparung 24 mit dem Kabelmantel 6 in Kontakt steht.

Zum Verschweißen wird der Bolzen 18 in die Aussparung 24 eingeführt. Die Multi-Orbital-Schweißwerkzeuge (nicht dargestellt) beginnen, gemäß der gezeigten Einspannung der Werkstücke, mit einer Schwingung in der xz-Ebene und die Druckbeaufschlagung erfolgt in y-Richtung. Die Schwingungsbewegung der Werkstücke 4 und 18 zueinander kann ellipsen- oder kreisförmig und zwischen 90° und 180° phasenverschoben sein. Es ist auch möglich, dass nur der Bolzen 18 in der xz-Ebene schwingt, und das Kabel 2 starr eingespannt ist. Durch die Multi-Orbital-Schweißung des Bolzens 18 mit dem Kabel 2 wird die Stirnfläche des Vorsprungs 22 stoffschlüssig mit dem Leiter 4 verbunden. Außerdem kann eine stoffschlüssige oder formschlüssige Verbindung zwischen der Mantelfläche 22 oder der Ringschulter 20 und dem Kabelmantel 6 erzeugt werden.

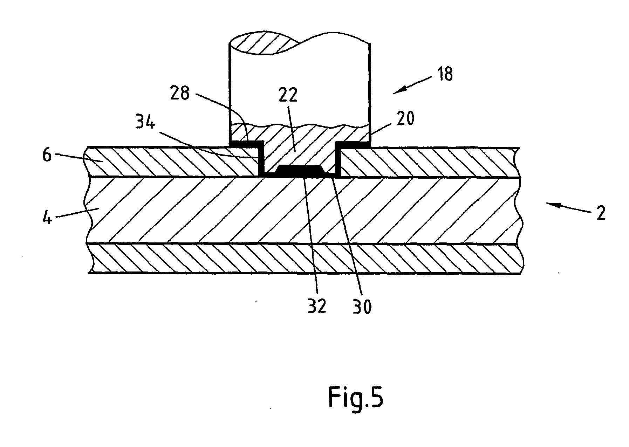

Fig. 5 zeigt ein Ergebnis einer Verschweißung des Bolzens 18 mit dem Kabel 2. Durch das Verschweißen wird zumindest entlang der Stirnfläche des Vorsprungs 22 eine stoffschlüssige Schweißverbindung 30 zwischen dem Bolzen 18 und dem Leiter 4 hergestellt. Schweißgut 32 kann in die Aussparung 26 fließen.

Durch das Multi-Orbital-Verschweißen kann eine formschlüssige Verbindung 34 zwischen der Mantelfläche des Vorsprungs 22 und dem Kabelmantel 6 hergestellt werden. Während des Verschweißens wird das Isolationsmaterial des Kabelmantels 6 aufgeschmolzen und schmiegt sich dann fest an die Mantelfläche des Vorsprungs 22. Hierdurch wird eine Abdichtung der Schweißnaht 30 gewährleistet.

Ist die Ringschulter 22 des Bolzens 18 aus Metall, so kann eine Schweißnaht 28 an der dem Kabelmantel 6 zugewandten Seite der Ringschulter 20 eine formschlüssige Verbindung sein. Während des Verschweißens wird durch das Aufliegen der Ringschulter 20 auf dem Kabelmantel 6 dieser an der entsprechenden Fläche aufgeschmolzen und es entsteht eine formschlüssige Schweißnaht 28.

Für den Fall, dass die Ringschulter 20 aus einem Isolationsmaterial gebildet ist, vorzugsweise aus demselben Material wie der Kabelmantel 6, wird während des Verschweißens des Bolzens 18 mit dem Leiter 4 eine stoffschlüssige Schweißverbindung 28 zwischen der Ringschulter 20 und dem Kabelmantel 6 erzeugt. Diese stoffschlüssige Verbindung ist ebenfalls eine sichere Abdichtung für die Schweißnaht 30.

Durch das Multi-Orbital-Verschweißen der Kabel miteinander wird in einem Arbeitsschritt eine lagestabile, sichere und günstige Verbindung von Leitern gewährleistet.

## Patentansprüche

1. Verfahren zur Herstellung einer elektrischen Verbindung zwischen zumindest zwei Kabeln, insbesondere Batteriekabel für Kraftfahrzeuge, wobei
- zumindest ein erstes Kabel aus einem Leiter und einem Isolationsmantel gebildet wird, und
- zumindest ein zweites Kabel zumindest aus einem Leiter gebildet wird,
**dadurch gekennzeichnet,**
- **dass** die Kabel mit Hilfe von Multi-Orbital-Schweißen derart verbunden werden, dass zwischen den Leitern der Kabel eine stoffschlüssige Verbindung hergestellt wird.

2. Verfahren nach Anspruch 1, **dadurch gekennzeichnet, dass** freie Stirnseiten zweier Kabel miteinander verbunden werden.

3. Verfahren nach Anspruch 2, **dadurch gekennzeichnet, dass** während des Multi-Orbital-Schweißens die Leiter an den freien Stirnseiten stoffschlüssig verbunden werden und die Kabelmäntel der Kabel stoffschlüssig verbunden werden, derart, dass eine Isolation der Schweißnaht durch die Verbindung der Kabelmäntel gebildet wird.

4. Verfahren nach einem der vorangehenden Ansprüche, **dadurch gekennzeichnet, dass** das erste Kabel als Flachkabel gebildet ist, dass das zweite Kabel als Anschlussbolzen gebildet ist und dass während des Multi-Orbital-Schweißens der Anschlussbolzen mit einer flache Seite des Leiters des ersten Kabels im Wesentlichen im T-Stoß verbunden wird.

5. Verfahren nach einem der vorangehenden Ansprüche, **dadurch gekennzeichnet, dass** der Bolzen entlang seiner Mantelfläche formschlüssig mit dem Kabelmantel des Flachleiters verbunden wird, derart, dass eine Isolation der Schweißnaht gebildet wird.

6. Verfahren nach einem der vorangehenden Ansprüche, **dadurch gekennzeichnet, dass** der Bolzen eine Ringschulter aufweist.

7. Verfahren nach einem der vorangehenden Ansprüche, **dadurch gekennzeichnet, dass** die Ringschulter des Bolzens aus Metal gebildet ist und dass während des Multi-Orbital-Schweißens die dem Flachleiter zugewandte Seite der Ringschulter zumindest teilweise formschlüssig mit dem Kabelmantel des Flachleiters verbunden wird, derart, dass eine Isolation der Schweißnaht gebildet wird.

8. Verfahren nach einem der vorangehenden Ansprüche, **dadurch gekennzeichnet, dass** die Ringschulter des Bolzens aus Isolationsmaterial gebildet ist und dass während des Multi-Orbital-Schweißens die dem Flachleiter zugewandte Seite der Ringschulter zumindest teilweise stoffschlüssig mit dem Kabelmantel des Flachleiters verbunden wird, derart, dass eine Isolation der Schweißnaht gebildet wird.

9. Verfahren nach einem der vorangehenden Ansprüche, **dadurch gekennzeichnet, dass** während des Multi-Orbital-Schweißens der Bolzen durch den Kabelmantel des ersten Leiters getrieben wird.

10. Verfahren nach einem der vorangehenden Ansprüche, **dadurch gekennzeichnet, dass** vor dem Multi-Orbital-Schweißen der Kabelmantel des ersten Leiters mit einer dem Querschnitt des Bolzens in etwa entsprechenden Öffnung versehen wird.

11. Verfahren nach einem der vorangehenden Ansprüche, **dadurch gekennzeichnet, dass** die Öffnung mittels Laser aus dem Kabelmantel geschnitten wird.

12. Verfahren nach einem der vorangehenden Ansprüche, **dadurch gekennzeichnet, dass** die Stirnseite eines Leiters Aussparungen aufweist, derart, dass Schmelzgut darin aufgenommen wird.

13. Verfahren nach einem der vorangehenden Ansprüche, **dadurch gekennzeichnet, dass** die Aussparung als Sackloch oder als Rillen gebildet ist.

14. Verbindungsanordnung zwischen zumindest zwei Kabeln, insbesondere Batteriekabel für Kraftfahrzeuge, mit
- zumindest einem ersten Kabel mit einem Leiter und einem Isolationsmantel, und
- zumindest einem zweiten Kabel mit zumindest einem Leiter,
**dadurch gekennzeichnet,**
- **dass** eine mittels Multi-Orbital-Schweißens gebildete stoffschlüssige Verbindung zwischen den Leitern der Kabel besteht.

## Claims

1. Method for producing an electrical connection between at least two cables, in particular battery cables for motor vehicles, wherein
- at least one first cable is formed from a conductor and an insulation sheath and
- at least one second cable is formed from at least one conductor,
**characterised in that**
- the cables are connected by means of multi-orbital welding such that a material closure connection between the conductors of the cables is obtained.

2. Method according to Claim 1, **characterised in that** free face sides of two cables are connected to one another.

3. Method according to Claim 2, **characterised in that** the conductors on the free face sides are connected by material closure during multi-orbital welding and the cable sheaths of the cables are connected by material closure such that the welding joint is insulated by the connection of the cable sheaths.

4. Method according to any one of the preceding claims, **characterised in that** the first cable is formed as a flat cable, **in that** the second cable is formed as a connecting bolt, and **in that** during multi-orbital welding the connecting bolt is connected substantially in a T-joint to a flat side of the conductor of the first cable.

5. Method according to any one of the preceding claims, **characterised in that** the bolt along its girthed area is connected by form closure to the cable sheath of the flat conductor such that the welding joint is insulated.

6. Method according to any one of the preceding claims, **characterised in that** the bolt has an annular shoulder.

7. Method according to any one of the preceding claims, **characterised in that** the annular shoulder of the bolt is formed from metal, and **in that** during multi-orbital welding the side of the annular shoulder facing the flat conductor is at least partly connected by form closure to the cable sheath of the flat conductor such that the welding joint is insulated.

8. Method according to any one of the preceding claims, **characterised in that** the annular shoulder of the bolt is formed from insulation material, and **in that** during multi-orbital welding the side of the annular shoulder facing the flat conductor is at least partly connected by material closure to the cable sheath of the flat conductor such that the welding joint is insulated.

9. Method according to any one of the preceding claims, **characterised in that** during multi-orbital welding the bolt is driven through the cable sheath of the first conductor.

10. Method according to any one of the preceding claims, **characterised in that** before multi-orbital welding the cable sheath of the first conductor is provided with an aperture approximately corresponding to the cross-section of the bolt.

11. Method according to any one of the preceding claims, **characterised in that** the aperture is cut out of the cable sheath by means of a laser.

12. Method according to any one of the preceding claims, **characterised in that** the face side of a conductor has recesses such that molten metal can be received therein.

13. Method according to any one of the preceding claims, **characterised in that** the recess is formed as a blind hole or as grooves.

14. Connection arrangement between at least two cables, in particular battery cables for motor vehicles, having
- at least one first cable having a conductor and an insulation sheath and
- at least one second cable having at least one conductor,
**characterised in that**
- a material closure connection, formed by means of multi-orbital welding, exists between the conductors of the cables.

## Revendications

1. Procédé pour la réalisation d'une liaison électrique entre au moins deux câbles, en particulier entre des câbles de batteries pour véhicules automobiles, dans lequel
- au moins un premier câble est formé par un conducteur et une gaine isolante, et
- au moins un deuxième câble est formé par au moins un conducteur,
**caractérisé en ce que**
les câbles sont reliés au moyen d'un soudage multi-orbital de sorte qu'une liaison de masse soit réalisée entre les conducteurs des câbles.

2. Procédé selon la revendication 1, **caractérisé en ce que** les côtés frontaux, libres entre les câbles, sont reliés ensemble.

3. Procédé selon la revendication 2, **caractérisé en ce que**, pendant le soudage multi-orbital, les conducteurs sont reliés ensemble, à leurs extrémités frontales, par liaison de masse, et que les gaines isolantes des câbles sont reliées par liaison de masse, de sorte qu'une isolation du cordon de soudure soit réalisée par la liaison des gaines des câbles.

4. Procédé selon l'une des revendications précédentes, **caractérisé en ce que** le premier câble est formé par un câble plat, que le deuxième câble est formé en tenon de raccordement, et que, pendant le soudage multi-orbital, le tenon de raccordement est relié à une face plate du conducteur du deuxième câble, sensiblement par aboutage en T.

5. Procédé selon l'une des revendications précédentes, **caractérisé en ce que** le tenon de raccordement est relié, par liaison de masse, le long de sa surface latérale à la gaine de câble du conducteur plat, de sorte qu'une isolation du cordon de soudure soit réalisée.

6. Procédé selon l'une des revendications précédentes, **caractérisé en ce que** le tenon présente un épaulement annulaire.

7. Procédé selon l'une des revendications précédentes, **caractérisé en ce que** l'épaulement annulaire du tenon est formé en métal, et que, pendant le soudage multi-orbital, le côté de l'épaulement annulaire, orienté vers le conducteur plat, est relié par liaison de masse, au moins partiellement, à la gaine de câble du conducteur plat, de sorte qu'une isolation du cordon de soudure soit réalisée.

8. Procédé selon l'une des revendications précédentes, **caractérisé en ce que** l'épaulement annulaire du tenon est formé en matière isolante et que, pendant le soudage multi-orbital, le côté de l'épaulement annulaire, orienté vers le conducteur plat, est relié par liaison de masse, au moins partiellement, à la gaine de câble du conducteur plat, de sorte qu'une isolation du cordon de soudure soit réalisée.

9. Procédé selon l'une des revendications précédentes, **caractérisé en ce que**, pendant le soudage multi-orbital, le tenon est enfoncé dans la gaine de câble du premier conducteur.

10. Procédé selon l'une des revendications précédentes, **caractérisé en ce que**, avant le soudage multi-orbital, la gaine de câble du premier conducteur est pourvue d'une ouverture, qui correspond à la section transversale du tenon.

11. Procédé selon l'une des revendications précédentes, **caractérisé en ce que** l'ouverture est découpée au laser dans la gaine du câble.

12. Procédé selon l'une des revendications précédentes, **caractérisé en ce que** le côté frontal d'un conducteur présente des évidements, qui sont destinés à recevoir la matière en fusion.

13. Procédé selon l'une des revendications précédentes, **caractérisé en ce que** les évidements sont réalisés sous la forme de trous borgnes ou de rainures.

14. Système de liaison entre au moins deux câbles, en particulier entre des câbles de batteries pour véhicules automobiles, avec
- au moins un premier câble, qui comprend un conducteur et une gaine isolante, et
- au moins un deuxième câble, qui comprend au moins un conducteur,
**caractérisé en ce qu'**il existe, entre les conducteurs des câbles, une liaison de masse réalisée par soudage multi-orbital.
